(19)

Europäisches
Patentamt
European
Patent Office
Office européen
des brevets

(11) **EP 2 094 037 A1**

(12) **EUROPEAN PATENT APPLICATION**

(43) Date of publication:
**26.08.2009 Bulletin 2009/35**

(51) Int Cl.:
***H04W 16/00*** (2009.01)

(21) Application number: **08003207.1**

(22) Date of filing: **21.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Breuer, Volker, Dr.**<br>  **16727 Bötzow (DE)**<br>• **Vesely, Alexander**<br>  **8330 Feldbach (AT)** |
| (71) Applicant: **Nokia Siemens Networks Oy**<br>**02610 Espoo (FI)** | (74) Representative: **Bruglachner, Thomas E.**<br>**Nokia Siemens Networks GmbH & Co. KG**<br>**Postfach 80 17 60**<br>**81617 München (DE)** |

(54) **Base station for a mobile network and method of operate a base station**

(57)    A base station for a cellular mobile network is provided, wherein the base station serves a or is associated with a specific cell of the cellular mobile network, wherein the base station comprises a determination unit adapted to determine which chunks are not used for communication in an edge region of the specific cell, and a communication unit adapted to communicate the determined chunks to base stations of neighbouring cells of the cellular mobile network. In particular, the network may be a Long Term Evolution network.

EP 2 094 037 A1

## Description

Field of Invention

The present invention relates to the field of network elements, in particular to a base station for a mobile network. Furthermore, the invention relates to a mobile network, a method of operating a base station of a mobile network, a program element, and a computer-readable medium.

Art Background

In mobile networks, e.g. in the so-called Long Term Evolution (LTE) networks, radio resources can be divided into chunks being independently usable for uplink (UL) transmission by a User Equipment (UE). However, a UE located in the outer cell edge of one base station (BS) may cause high interference on certain chunks, i.e. the chunks that are in use, due to its transmission signal being also received by the non serving neighbour BS.

Thus, there may be a need for a base station for a mobile network and a method of operating a base station in a mobile network which provides an improved performance, in particular, with respect to a decreased probability of interference effects.

Summary of the Invention

This need may be met by a base station for a cellular mobile network, a cellular mobile network, a method of operating a base station of a cellular mobile network, a program element, and a computer-readable medium according to the independent claims. Advantageous embodiments of the present invention are described by the dependent claims.

According to an exemplary aspect a base station for a cellular mobile network is provided, wherein the base station serves a or is associated with a specific cell of the cellular mobile network, wherein the base station comprises a determination unit adapted to determine which chunks are not used for communication in an edge region of the specific cell, and a communication unit adapted to communicate the determined chunks to base stations of neighbouring cells of the cellular mobile network. In particular, the network may be a Long Term Evolution network.

In particular, the cellular mobile network may comprise or may be formed by a plurality of cells which are served each by a base station. Thus, it may be said that each cell has an associated base station. The determined chunks may also be called free chunks, since these chunks are not used for communication of a User Equipment (UE) located in an area of the edge of the respective cell. However, these free chunks may be used for communication in centre of the respective cell, i.e. in regions where the probability is low that communication in a neighbouring cell is interfered. Thus, these free chunks may be used for communication between a UE and a base station both located in a neighbouring cell.

According to an exemplary aspect a cellular mobile network is provided which comprises two base stations according to an exemplary aspect of the invention wherein a first one of the two base stations is associated with a first cell of the mobile network and the second one of the two base stations is associated with a second cell of the mobile network, wherein the first base station is adapted to communicate information concerning the determined chunks to the second base station, and wherein the second base station is adapted to schedule communication to a User Equipments based on the communicated information concerning the determined chunks.

According to an exemplary aspect of the invention a method of operating a base station for a cellular mobile network is provided, wherein the base station serves a specific cell of the cellular mobile network, and wherein the method comprises determining which chunks are not used for communication in an edge region of the specific cell, and communicating the determined chunks to base stations of neighbouring cells of the cellular mobile network.

According to an exemplary aspect of the invention a program element is provided, which, when being executed by a processor, is adapted to control or carry out a method according to an exemplary aspect.

According to an exemplary aspect a computer-readable medium is provided, in which a computer program is stored which, when being executed by a processor, is adapted to control or carry out a method according to an exemplary aspect.

The term "chunk" may particularly denote to an information block which may typically be divided into a group of subcarriers and a number of consecutive symbols per subcarriers. Thus, a chunk may be illustrated by a two dimensional array displaying the subcarriers in one direction and the number of symbols in the other direction. The size of the chunk may define the granularity of the communication in the respective network, i.e. the smallest data block which may be transmitted. In particular, different chunks may belong to or may be separated from each other by using different frequencies or channels. Thus, it may be equivalent to adapt the communication unit to determine which subcarriers, channels and/or frequencies are not used for communication on the cell edge of the specific cell. Such a communication may in particular be a communication between the cell's base station and user devices (UE) or terminals, e.g. mobile phones, PDA, laptops or the like, operated in the specific cell. Instead of determining chunks which are not used it may also be possible to determine Physical Resource Blocks (PRBs) which are not used for communication in the cell's edge.

The term "cell edge" may particularly denote a range or area close to the edge of a specific cell, e.g. an area of the specific cell which may be covered by the associated base station of the specific cell but may also be reachable by a base station of the neighbouring cell. Thus, it may be possible to define the "cell edge" as the area in which interference between signals transmitted or emitted by neighbouring base stations may occur or the "cell edge" area may be defined as the area covered by both base stations. Thus, this cell edge may be the area of the cellular network where special care may be necessary to reduce the probability of interferences and disturbances through signals emitted by base stations relating to different cells of the cellular network. Another possible definition of "cell edge" may be that the cell edge may include or may be formed by the regions which are covered by the overlapping range of neighbouring base stations. An additional definition of the cell's edge region may be that measured Round Trip Times (RTT) of a communication between the base station and a UE is above a predetermined threshold, i.e. that the respective UE is located more than a predetermined distance away from the base station. Also the Reference Signal Received Power (RSRP) may be used to identify the cell's edge region, e.g. in case the RSRP of a communication between a UE and a base station falls below a predetermined threshold it is assumed that the respective UE is located far away from the base station and may thus be located in the cell's edge region.

In particular, the term "not used chunks" may particularly denote chunks, subcarriers, channels or frequencies which are actually not used by a communication between the base station and UEs and/or which were not used for a predetermined time period for such a communication. It should be noted that all above described units and possible further units may be incorporated, implemented or formed by a single unit, e.g. a processing unit including a suitable software, or may be formed by a plurality of units.

By providing a base station able to determine unused or free chunks, i.e. chunks which are at least not used in an edge region of the cell of the respective base station it may be possible to communicate or indicate these chunks to the neighbouring base station. Thus, the neighbouring base station may be able to use this information to select chunks which can be used for communication with UEs which are located and operated in the edge region of the neighbouring cell. Thus, a positive indication may be communicated to the neighbouring cell where to schedule communication with associated UEs. Thus, a coordination between two neighbouring BS may be beneficial using different chunks for all cell edge users so that high interference situations may be avoided. The transmission or communication of free chunks may be in particular suitable in LTE networks or systems since these systems may have higher capacities so that additional information, e.g. information or identification of free chunks, can be transmitted. Such the base station and the method according to the invention may be more advantageously implemented into LTE systems than in UMTS systems.

A gist of an exemplary aspect may be seen in the fact that a base station for a cellular mobile network is provided which is adapted to determine free chunks, i.e. chunks which are at least not used for a communication with UEs in the edge region of the respective cells. These free chunks may then be indicated to neighbouring base stations in the cellular mobile network which may then use this information for scheduling purposes, e.g. to determine which chunks shall be used for communication with UEs in the respective edge region of their cells. Thus, by providing a positive indication it may be possible to reduce the probability of interference and thus to improve the performance of the cellular mobile network.

Next, further exemplary embodiments of the base station are described. However, these embodiments also apply to the cellular mobile network, the method of operating a base station, the program element, and the computer-readable medium.

According to another exemplary embodiment of the base station the determination unit is adapted to set up a first list comprising the chunks which are not used for communication on the specific cell's edge. In particular, such a list may be called a "positive list" since in this list the chunks, channels or frequencies are listed which are suitable for communication between neighbouring base stations and respective UEs which are actually positioned or operated in the cell's edge of the neighbouring base station. The determination unit may be adapted to include chunks, subcarriers, channels or frequencies into the positive list which are actually not used for communication in the cell's edge and/or which were not used for such communication for a predetermined time span, wherein the predetermined time span may be a time span which ensures that the probability for an interference is low. For example, in case a specific chunk was not used for a while (the respective time range may start at one minute up to a quarter of one hour, however, this is dependent on the intended deployment of the method) for a communication in the cell's edge region of a first cell, it is unlikely that a beginning communication in a neighbouring second cell using this chuck may interfere with a newly started communication in the first cell.

In particular, the communication unit may be adapted to transmit the first list to base stations associated with neighbouring cells of the cellular mobile network. In particular, the first list may comprise chunks which are most suitable or which are the best choice for communications between a base station in a neighbouring cell and UEs in the cell's edge of the neighbouring cell. In particular, such a "positive list" may be based on actual usage and/or may be based on an analysis of chunks frequently used in the past or in a predetermined former time span. For example, a statistical analysis may be performed which relates to the object which chunk has been used how many times and in which region or area of the respective cell. Based on this analysis the most suitable chunks may be determined to be communicated to other base station for their communication with UEs in areas of the cell's edge.

According to another exemplary embodiment of the base station the determination unit is further adapted to set up a second list comprising the chunks which are actually used and/or which were frequently used in the past for communication in the cell's edge region. Such a list of actually used chunks may also be called a "negative list" or "negative indication" list, i.e. a list indicating which chunks are less suitable for communication in the cell's edge of a neighbouring cell.

According to another exemplary embodiment of the base station the communication unit is further adapted to transmit the second list to base stations associated with neighbouring cells of the cellular mobile network.

By communicating the second or negative list to the base stations of neighbouring cells it may be possible that these neighbouring cells base their scheduling decisions on this negative list as well which may improve the performance of the cellular mobile network.

According to another exemplary embodiment the base station further comprises a scheduling unit which is adapted to schedule communication between the base station and User Equipments in the associated cell based on communicated determined chunks. In particular, the scheduling unit or scheduler may be adapted to schedule communication to UEs located or operated in the respective cell's edge based on a first list and/or a second list transmitted from another base station of the cellular mobile network. However, it may also be possible that the scheduler of one base station is adapted to schedule future communication of the one base station with UEs based on the list, e.g. that the scheduler prefers specific chunks, channels or frequencies for communication in the cell's edge and other specific chunks for communication in the centre of the respective cell, so that the list is more stable, i.e. does not change rapidly in time.

According to another exemplary embodiment of the base station the determination unit is adapted to sort entries in the first list according to a predetermined criterion. In particular, the predetermined criterion may be related to the level of suitability of the respective chunk for communication in the cell's edge. Such a level of suitability may be defined by a time span the respective chunk was not used for communication in the cell's edge, the distance between the cell's edge and an UE which is closest to the cell's edge and which uses the respective chunk, the probability of interference with a chunk which is not on the first list, or the like.

Furthermore, the first list may be divided into two or more sublists, wherein a first sublist may comprise the most suitable chunks, channels, or frequencies, the second sublist comprises the chunks which are less suitable than the chunks in the first sublist but which are more suitable than the chunks in the third sublist and so on. Thus, it may be possible to define a kind of hierarchical list or structure indicating the suitability of different chunks for communication in the cell's edge. Alternatively, the second sublist may comprise every chunk listed in the first sublist and some additional chunks which are not listed in the first sublist, wherein the additional chunks represent the less suitable chunks.

According to another exemplary embodiment the base station further comprises a demanding unit adapted to demand a first list of another base station of the cellular mobile network. In particular, the demanding unit may be adapted to demand a first list from a base station of a neighbouring cell. Furthermore, the base station may comprise a receiving unit adapted to receive the list. In particular, the demanding unit may be adapted to demand further suitable chunks, e.g. by demanding the second sublist after receiving the first sublist, in case the number of chunks listed in the first sublist is not sufficient for the needs of the neighbouring base station.

According to another exemplary embodiment the base station further comprises an interface adapted to provide a communication path for communication the determined chunks to another base station of the cellular mobile network. In particular, the interface may be a so-called X2 interface of a Long Term Evolution (LTE) network. The X2 interface may further be adapted to perform a so-called Inter Cell Interference Coordination (ICIC) handling, and may be based on fast signalling having a minimum time interval around 20 ms, for example. In particular, highly overloaded or interfering PRBs may be indicated via X2.

According to another exemplary embodiment the base station further comprises an interference determining unit adapted to determine a level of interference occurring in a communication between the base station and a user device in cell's edge region to a neighbouring cell of the cellular mobile network. In particular, the interference determining unit may be further adapted to trigger an interference indication signal in case the determined interference level exceeds a predetermined threshold. The interference indication signal may be transmitted to the base station of the neighbouring cell and may trigger the sending of an indication of a chunk ensuring a lower level of interference, wherein the sending is performed by the base station of the neighbouring cell. The threshold may be determined based on a maximum interference level which ensures a sufficient communication between the user device and the respective base station.

Next, further exemplary embodiments of the method of operating a base station are described. However, these embodiments also apply to the base station, the cellular mobile network, the program element, and the computer-readable medium.

According to another exemplary embodiment the method further comprises performing a handshake process between the first base station and a neighbouring base station, wherein the handshake process comprises setting a minimum number of determined chunks. In particular, the setting is performed by one of the neighbouring base stations. The minimum number may be set depending on the traffic load demands of the respective base station.

The minimum number or limit may be also cater for best choice and second best choice chunk/PRB indications. For example the best or first choice may relate to areas where for a very high probability (x%) no scheduling decisions will be performed for cell edge users while the best choice may relate to areas where for a high probability (y%, y<x)) no scheduling decisions will be performed for cell edge users. An adjusting of the limits may be performed at a lower rate, e.g. to cater for rather medium term scheduling purposes, than it is usually used for UL ICIC. Thus, it may be possible to keep signalling amount at a fixed ratio.

That is, on top of a fast UL ICIC scheduling information exchange, which can be done Physical Resource Block wise or for possibly reduced signalling considerations also chunks wise, which fast UL ICIC scheduling information exchange may be performed by a method comprising the steps described in the independent method claim, a handshake process is carried out. This handshake process may set and/or communicate the minimum number of necessary unused chunks between base stations of the cellular mobile network. The minimum number may be set by the base station which observes interferences in its respective communications with UEs and may be communicated to its respective neighbouring base stations. This minimum number or limit setting may depend on the traffic load demands of the interfered base station and may thus change over time or may be different for different load situations.

Summarizing an exemplary aspect of the invention may be seen in the fact that a base station and a method of operating a base station for a LTE network is provided which may enable flexible signalling on X2 interfaces for UL ICIC handling by utilizing a positive indication. Such a positive indication may relate to free chunks, i.e. chunks which are at least not used in communication which UEs in the cell's edge region, and may be organized in form of a list. A base station or eNodeB (evolved NodeB in case of LTE network) receiving such a positive indication may be in the position to further design its own scheduling strategy for the "next time", i.e. for the next communications with UEs in its own cell's edge. In particular, the generating of a plurality of sublists, e.g. two sublists, may be possible, wherein the first sublist indicates the best candidates or opportunities from system perspective for a communication in the edge region of a neighbouring cell, and wherein the second sublist indicates the second best candidates.

In case one base station or eNodeB receives signalling of positive and/or negative indication lists from several other eNodeBs an alignment may be performed between the different indications received. According to this exemplary aspect not only negative indications are transmitted but also positive indications are transmitted, i.e. free chunks are also identified and indicated to neighbouring eNodeBs, which may make decision easier which chunks should be used for scheduling, especially if such indications are received from many eNodeBs on different frequency areas. However, a neighbouring eNodeB may have more scheduling needs than free chunks or Physical Resource Blocks (PRB) are indicated. In such a case it may be possible that the respective neighbouring eNodeB requests for a list or sublist including the second best chunks or second best scheduling opportunities. In particular, in embodiments in which a plurality of base stations is operating the respective neighbouring eNodeB may request a second best choice or second sublist from each of its neighbouring base stations. However, in a preferred embodiment the respective neighbouring eNodeB may only requests a second sublist only from that neighbouring base station which has the least number of free chunks in the first sublist.

The limit reporting for negative and positive indication may be set by the interference receiving base station, i.e. the neighbouring base station which receives a positive indication list from a first base station, and hence can signalled back to the first base station for adjustment. In particular, adjustment may not only mean to indicate the best opportunities to schedule but also to indicate the second best. Especially the possibility of a neighbouring base station to request where "positive" areas, i.e. chunks or PRBs which are only seldom or rarely used by the first base station, could be seen for its own scheduling may be beneficial for the performance of the cellular mobile network. An eNodeB or base station receiving this indication from several other eNodeBs may thus spare all areas indicated as "negative" and may try to concentrate its cell edge users into those areas indicated by all of the other eNodeBs as "positive". In case that the areas indicated as "positive" by all surrounding eNodeBs are not sufficient from an eNodeB's scheduling need point of vies, it may send an increase request for "positive", i.e. an request for a further indication of chunks which may be used and which still have a low probability of interference.

It has to be noted that embodiments and aspects of the invention have been described with reference to different subject-matters. In particular, some embodiments and aspects have been described with reference to apparatus type claims whereas other embodiments have been described with reference to method type claims. However, a person skilled in the art will gather from the above and the following description that, unless other notified, in addition to any combination of features belonging to one type of subject-matter also any combination between features relating to different subject-matters, in particular between features of the apparatus type claims and features of the method type claims is considered to be disclosed with this application.

The aspects and exemplary embodiments defined above and further aspects of the invention are apparent from the example of embodiment to be described hereinafter and are explained with reference to these examples of embodiment.

Brief Description of the Drawings

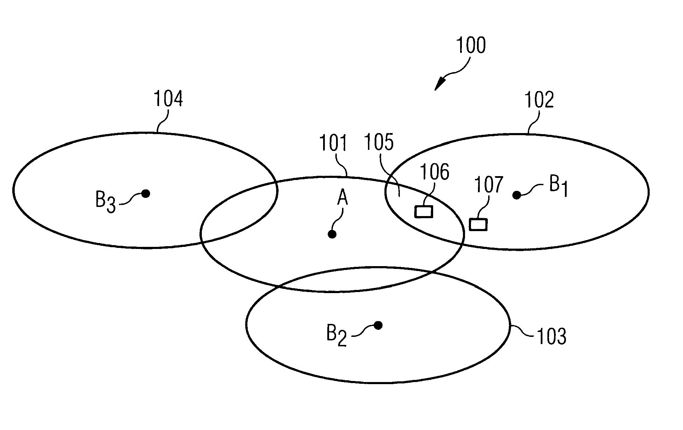

Fig. 1 schematically shows a portion of a cellular mobile network.

Detailed Description

The illustration in the drawing is schematic.

With reference to Fig. 1 a cellular mobile network in particular an LTE network and a method of operating a base station of the cellular mobile network will be described.

Fig. 1 schematically shows a portion of a cellular mobile network 100 comprising a base station or eNodeB A which is surrounded by three eNodeB B1, B2 and B3. The complete cellular mobile network comprises of course a greater number of base stations. Each of the four shown base station is associated to a respective cell, i.e. base station A is associated to cell 101, base station B1 is associated to cell 102, base station B2 is associated to cell 103 and base station B3 is associated to cell 104. As indicated in the figure the cells are overlapping each other in edge regions of neighbouring cells. For example an edge region between cell 101 and 102 is indicated by the region labeled 105 in Fig. 1. In case a User Equipment (UE) 106 is present and operating in this overlapping region or area or close to it interference may occur between UE 106 communicating with its respective base station A and another UE 107 communicating with its respective base station B1, in case for both communications the same chunks or Physical Resource Blocks (PRBs) are used.

To decrease the probability of interference and to increase the performance of the cellular mobile network 100 base stations B1, B2 and B3 send indications $X_{B1}$, $X_{B2}$, $X_{B3}$, respectively, to base station A where not to schedule for the chunks or PRBs, as the chunks listed in this indications are already used for their own cell edge to base station A. The decision whether a specific chunk or PRB is put on this negative indication list may be based on a Received Signal Code Power (RSCP). That is, in case the RSCP falls under a predetermined level it may be assumed that the respective UE is located in the cell's edge of the respective base station.

Furthermore, the base stations B1, B2 and B3 send indications $Y_{B1}$, $Y_{B2}$, $Y_{B3}$, respectively, to base station A comprising the chunks where the respective base station only serves close by users or no user at all. The decision whether a specific chunk or PRB is put on this positive indication list may be based on a retrievable measure, e.g. based on a Round Trip Time (RTT) RSCP. That is, in case the RTT RSCP is under a predetermined threshold it may be assumed that the respective UE is located in the cell's centre of the respective base station.

The usage of chunks which are present on the positive indication list may ensure that with a very high probability (x%) no interference will occur when base station A schedules the respective chunks or PRBs, since these chunks are not used for communication in the cell's edge by the base stations B1, B2 and B3 or not used at all.

Upon receiving $X_{B1}$, $X_{B2}$, $X_{B3}$ and $Y_{B1}$, $Y_{B2}$, $Y_{B3}$ the base station A decide as described in the following:

- Do not indicate to for own users or UEs in the cell edge region to use chunks or PRBs included in the set union of $X_{B1}$, $X_{B2}$, $X_{B3}$, i.e. chunks which are included in $X_{B1} \cup X_{B2} \cup X_{B3}$.
- Do use for own cell's edge users the chunks or PRBs included in the intersection of $Y_{B1}$, $Y_{B2}$, $Y_{B3}$, i.e. chunks which are included in $Y_{B1} \cap Y_{B2} \cap Y_{B3}$.
- If the required number of resources for own cell's edge users is larger than the elements in the intersection defined above $Y'_{B1}$, $Y'_{B2}$, $Y'_{B3}$ are requested wherein $Y'_{B1}$, $Y'_{B2}$, $Y'_{B3}$ represents second best opportunity chunks. In this respect elements of $Y'_{B1}$, $Y'_{B2}$, $Y'_{B3}$ may only be the second best opportunity chunks, i.e. the chunks that are less suitable than the chunks listed in $Y_{B1}$, $Y_{B2}$, $Y_{B3}$, or elements of $Y'_{B1}$, $Y'_{B2}$, $Y'_{B3}$ may also include the best opportunity chunks.

  - In a more advanced state if the number of elements (chunks or PRBs) in $Y_{B1}$ and $Y_{B2}$ is higher than in $Y_{B3}$ a request may be send only to base station B3 to receive a modified $Y'_{B3}$.

- If sufficient resources for own cell's edge users are described by $Y'_{B1} \bigcap Y'_{B2} \bigcap Y'_{B3}$ no further change of values for positive indication is performed anymore by the requesting base station.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

List of reference signs:

| | |
|---|---|
| 100 | Cellular mobile network |
| 101 | Cell A |
| 102 | Cell B1 |
| 103 | Cell B2 |
| 104 | Cell B3 |
| 105 | Overlapping region |
| 106 | User Equipment 1 |
| 107 | User Equipment 2 |

**Claims**

1. A base station (A) for a cellular mobile network (100), wherein the base station (A) serves a specific cell (101) of the cellular mobile network (100), wherein the base station (A) comprises:

   a determination unit adapted to determine which chunks are not used for communication in an edge region of the specific cell (101), and
   a communication unit adapted to communicate the determined chunks to base stations (B1, B2, B3) of neighbouring cells (102, 103, 104) of the cellular mobile network (100).

2. The base station (A) according to claim 1, wherein the determination unit is adapted to set up a first list comprising the chunks which are not used for communication on the specific cell's edge.

3. The base station (A) according to claim to claim 1, wherein the determination unit is further adapted to set up a second list comprising the chunks which are actually used and/or which were frequently used in the past for communication in the cell's edge region.

4. The base station (A) according to claim 3, wherein the communication unit is further adapted to transmit the second list to base stations associated with neighbouring cells (102, 103, 104) of the cellular mobile network (100).

5. The base station (A) according to claim 1, further comprising:

   a scheduling unit which is adapted to schedule communication between the base station (A) and user devices in the associated cell based on communicated determined chunks.

6. The base station (A) according to claim 2, wherein the determination unit is adapted to sort entries in the first list according to a predetermined criterion.

7. The base station (A) according to claim 2, further comprising:

   a demanding unit adapted to demand a first list of another base station of the cellular mobile network (100).

8. The base station (A) according to claim 1, further comprising:

   an interface adapted to provide a communication path for communication the determined chunks to another base station (B1, B2, B3) of the cellular mobile network (100).

9. The base station (A) according to claim 1, further comprising:

   an interference determining unit adapted to determine a level of interference occurring in a communication between the base station and a user device in cell's edge region of a neighbouring cell of the cellular mobile network.

10. A cellular mobile network (100) comprising:

    two base stations (A, B1, B2, B3) according to claim 1,
    wherein a first one (A) of the two base stations is associated with a first cell (101) of the mobile network and the second one of the two base stations (B1, B2, B3) is associated with a second cell (102, 103, 104) of the mobile network (100), wherein the first base station (A) is adapted to communicate information concerning the determined chunks to the second base station (B1, B2, B3), and
    wherein the second base station (B1, B2, B3) is adapted to schedule communication to a User Equipments based on the communicated information concerning the determined chunks.

11. A method of operating a base station (A) for a cellular mobile network (100), wherein a fist base station (A) serves a first cell (101) of the cellular mobile network (100), the method comprising:

    determining which chunks are not used for communication in an edge region of the first cell (101), and

communicating the determined chunks to base stations (B1, B2, B3) of neighbouring cells (102, 103, 104) of the cellular mobile network (100).

12. The method according to claim 11, further comprising:

performing a handshake process between the first base (A) station and a neighbouring base station (B1, B2, B3), wherein the handshake process comprises setting a minimum number of determined chunks.

13. The method according to claim 12, wherein the setting is performed by one of the neighbouring base stations (B1, B2, B3).

14. A program element, which, when being executed by a processor, is adapted to control or carry out a method according to claim 11.

15. A computer-readable medium, in which a computer program is stored which, when being executed by a processor, is adapted to control or carry out a method according to claim 11.

**European Patent Office**

**EUROPEAN SEARCH REPORT**

Application Number

EP 08 00 3207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/008920 A (QUALCOMM INC [US]; KAPOOR SAMIR [US]; LI JUNYI [US]; LAROIA RAJIV [US]) 17 January 2008 (2008-01-17) | 1,10,11, 14,15 | INV. H04Q7/36 |
| Y | * paragraph [0020] - paragraph [0026] * <br><br> * paragraph [0045] * <br> * figures 1,4,11 * <br> ----- | 2-9,12, 13 | |
| Y | WO 2007/073250 A (ERICSSON TELEFON AB L M [SE]; RACZ ANDRAS [HU]; KAZMI MUHAMMAD [SE]) 28 June 2007 (2007-06-28) <br> * page 2, line 23 - page 3, line 11 * <br> * page 6, line 32 - page 10, line 5 * <br> ----- | 2-9,12, 13 | |
| A | US 6 456 848 B1 (FREEMAN DAVID F [US] ET AL) 24 September 2002 (2002-09-24) <br> * column 2, line 44 - line 62 * <br> * column 5, line 5 - column 7, line 12 * <br> * figures 3-6 * <br> ----- | 1-15 | |
| A | US 2007/086406 A1 (PAPASAKELLARIOU ARIS [US]) 19 April 2007 (2007-04-19) <br> * paragraph [0025] - paragraph [0026] * <br> * paragraph [0042] - paragraph [0047] * <br> * figure 7 * <br> ----- | 1-15 | TECHNICAL FIELDS SEARCHED (IPC) <br><br> H04Q |

The present search report has been drawn up for all claims

| Place of search | Date of completion of the search | Examiner |
|---|---|---|
| Munich | 4 September 2008 | Rabe, Marcus |

EPO FORM 1503 03.82 (P04C01)

**ANNEX TO THE EUROPEAN SEARCH REPORT
ON EUROPEAN PATENT APPLICATION NO.** EP 08 00 3207

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2008

| Patent document cited in search report | | Publication date | Patent family member(s) | | Publication date |
|---|---|---|---|---|---|
| WO 2008008920 | A | 17-01-2008 | US | 2008013480 A1 | 17-01-2008 |
| WO 2007073250 | A | 28-06-2007 | EP | 1964424 A1 | 03-09-2008 |
| US 6456848 | B1 | 24-09-2002 | NONE | | |
| US 2007086406 | A1 | 19-04-2007 | NONE | | |

EPO FORM P0459

For more details about this annex : see Official Journal of the European Patent Office, No. 12/82